# EUROPEAN PATENT SPECIFICATION

(11) **EP 0 506 173 B1**
(45) Date of publication and mention of the grant of the patent: **25.06.1997**
(21) Application number: 92200755.4
(22) Date of filing: 17.03.1992
(51) Int. Cl.: G11B 23/02, G11B 23/023

(54) **Holder for a cassette**
Kassettenbehälter
Boîte pour cassette

(30) Priority: 26.03.1991 AT 666/91
(43) Date of publication of application: 30.09.1992
(73) Proprietor: Philips Electronics N.V., 5621 BA Eindhoven (NL)
(72) Inventor: Habelt, Gerhard, NL-5656 AA Eindhoven (NL)
(74) Representative: Cuppens, Hubertus Martinus Maria

(56) References cited:
- EP-A- 0 092 666
- AT-B- 340 165
- DE-A- 2 613 389

## Description

The invention relates to a holder of rectangular shape which comprises two main walls and two side walls and a rear wall interconnecting the two main walls, and is open at a fourth side lying opposite the rear wall, which holder is adapted to receive through the open side a rectangular cassette with a record carrier contained therein in order to protect the cassette and, in at least one side wall is situated a clamping member for clamping a cassette inserted in the holder, which clamping member is connected to the holder in a recess of said side wall, comprises a part which projects into the holder interior and is made of an elastic material and, *via* the part which projects into the holder interior, can be partly deformed elastically by a cassette inserted in the holder.

For such a holder, as developed by the Applicant and described in the document EP-A2-0.493.845, it has been proposed to construct the clamping member as a plug-type member of an elastomeric material and to snap the clamping member with an annular groove formed in this member into a hole in the relevant side wall of the holder. In practice, such a clamping member can be manufactured by means of a moulding process. When a cassette is inserted into the holder and cooperates with the clamping member comparatively large elastic deformations occur which deformations when the clamping member extends through the relevant side wall cause the clamping member to protrude outwardly, *i.e.* to form a bulge, which is undesirable not only for cosmetic reasons. The bulging sides will prevent a close and space-saving stacking of the packages. This may be particularly harmful in automatic cassette changers. Moreover, with such a plug-type clamping member the likelihood of the member being inadvertently pressed out of the hole in the side wall is comparatively high.

It is an object of the invention to mitigate the above problems with a holder of the type defined in the opening paragraph and to provide a holder whose clamping member can be manufactured simply, which has a stable and lasting connection between the clamping member and the holder, and which does not give rise to any substantial elastic deformations. According to the invention this object is achieved in that the clamping member is made of an abrasion-proof elastic plastics and the clamping member comprises a flat elastically deformable plate portion whose thickness is smaller than that of the side wall wherein the clamping member is connected to the holder and whose main plane runs parallel with said side wall, a clamping projection projecting from said plate portion into the holder interior to retain a cassette inserted into the holder and the plate portion being retained by a retaining portion connected to the holder. Such a clamping member of an elastic plastics can be manufactured by a simple injection-moulding process requiring a comparatively short cycle time, which is advantageous for mass production. Such a clamping member is not as soft as a silicone rubber clamping member, so that deformations can be kept within limits and the appearance is not disturbed by conspicuous deformations. Moreover, such a plastics clamping member has the advantage of a high resistance to abrasion and a long life and can be manufactured accurately and with small tolerances. In addition, such a clamping member of an elastic plastics can be connected to the holder in a very stable and reliable manner, so that the risk of the clamping member being lost is avoided. The proposed construction of the clamping member is found to be advantageous for minimal visible deformations and a reliable connection to the holder.

It is to be noted that a holder for receiving a cassette is known from DE-A1-26 13 389, which holder comprises a housing having two main walls and three side walls and a holder means which is pivotably mounted in the housing and serves to hold a cassette. The holder means comprises resilient latching elements of an elastic plastics, which elements are adapted cooperate with the reel hubs of the cassette to lock the reel hubs against rotation. These latching elements are not connected to the holder in the direct proximity of a side wall of the holder but to the holder means situated inside the holder, so that deformations of the latching elements cannot affect the appearance of the holder. Moreover, the latching elements do not serve for clamping a cassette in the holder but for blocking the reel hubs of the cassette. In addition, the latching elements do not comprise an elastically deformable plate portion from which a clamping projection projects into the holder interior to clamp a cassette inserted into the holder and which is retained in the holder by a retaining portion connected to the holder, as is the case with the clamping member of the holder in accordance with the invention, yielding the above-mentioned advantageous features of the invention.

Moreover, it is to be noted that from Austrian Patent Specification 340,165 a holder for a magnetic-tape cassette is known, which comprises a readily deformable ribbon-shaped ejection element which may be made of an elastic plastics and which also serves as a positively acting retaining element. However, this element is neither connected to the holder in the direct proximity of a side wall thereof but is fitted comparatively loosely in the holder. The ejection element neither comprises an elastically deformable plate portion from which a clamping projection projects into the holder interior to clamp a cassette inserted into the holder and which is retained in the holder by a retaining portion connected to the holder, as is the case with the clamping member of the holder in accordance with the invention, yielding the above-mentioned advantageous features of the invention.

With respect to the construction of the retaining portion of such a clamping member it is found to be advantageous if the retaining portion of the clamping member is formed by a frame surrounding the elastically deformable plate portion of the clamping member. This is advantageous because with such a construction the elastically deformable plate portion is retained all around.

With respect to the connection of such a clamping member to the holder it is found to be advantageous if a groove-spring means is interposed between the holder and each of at least two mutually parallel frame limbs and, to mount the clamping member on the holder, the clamping member is slidable onto the holder in a slide-on direction which extends parallel to the orientation of the two mutually parallel groove-spring means. This results in simple mounting and a comparatively accurate positioning of the clamping member on the holder.

It is also found to be advantageous for the connection of such a clamping member to the holder if the clamping member comprises a latching nose which projects into the holder interior from the frame and which when the clamping member is slid onto the holder engages behind a holder portion to block a movement of the clamping member in a direction opposite to the slide-on direction. In this way the clamping member is secured to the holder in a very simple manner and is yet easy to detach from the holder by releasing the snapped connection, for example in order to replace the clamping member when it is damaged or no longer functions correctly.

With respect to the plastics for the clamping member it is found to be advantageous if the plastics of which the clamping member is made is a block copolymer which can be processed as a thermoplastic and which comprises a hard segment of polybutylene teraphtalate and a soft segment on the basis of long-chain polyether glycols. This synthetic material combines a number of properties which are advantageous in the present context, such as a high tenacity and resilience, a high creep resistance, impact strength, bending endurance, flexibility at low temperatures and conservation of the advantageous properties at high temperatures. Such a plastics is commercially available from Messrs. Du Pont under the trade name "Hytrel".

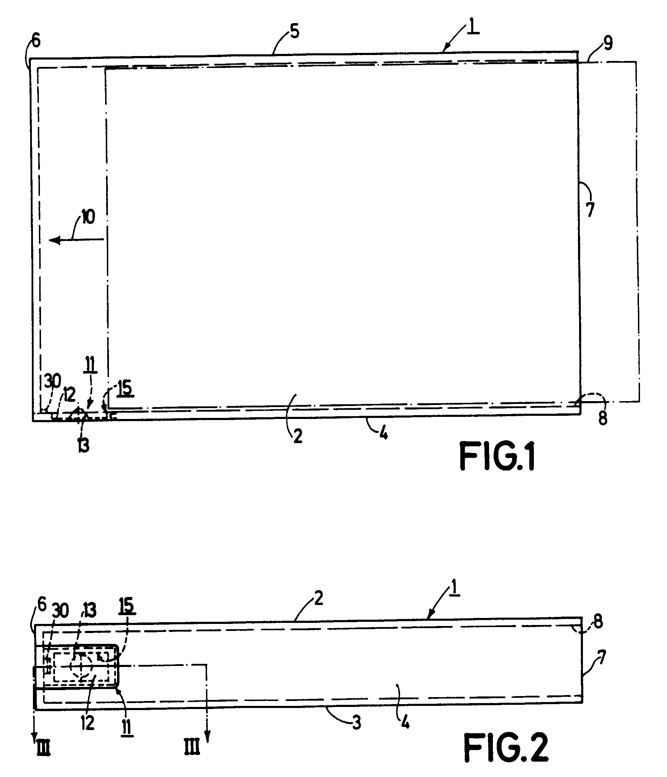

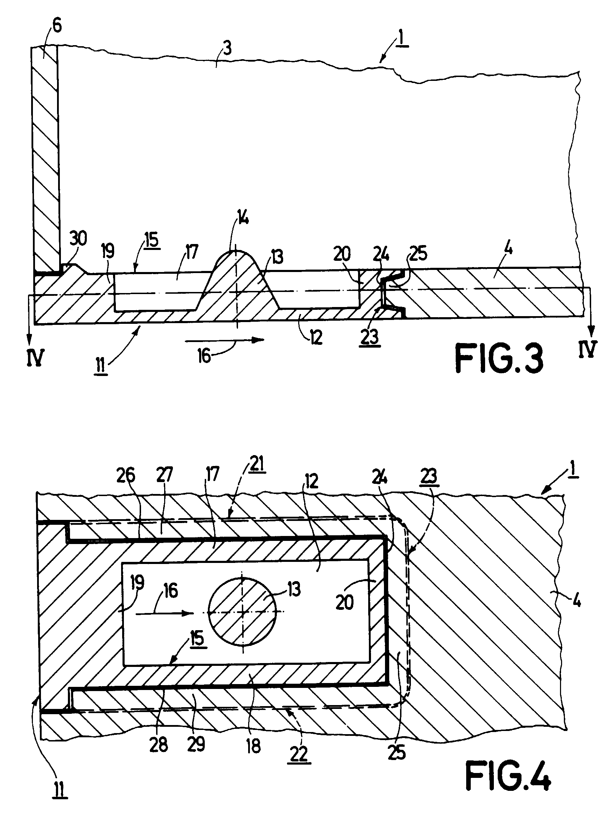

An embodiment of the invention will now be described in more detail by way of non-limitative example. Fig. 1 is an enlarged-scale slightly diagrammatical plan view of a holder in accordance with an embodiment of the invention which is adapted to receive a cassette containing a magnetic tape and which comprises a clamping member which can be mounted in that it is slid onto the holder. Fig. 2 is a side view at the side wall of the holder shown in Fig. 1, which side wall carries the clamping member. Fig. 3 shows a part of the holder shown in Fig. 2, including the clamping member, in a sectional view taken on the line III-III in Fig. 2 and to a larger scale than in Fig. 2. Fig. 4 shows the same part of the holder of Figs. 1 and 2 as shown in Fig. 3 in a sectional view taken on the line IV-IV in Fig. 3.

Figures 1 and 2 show a rectangular holder 1 in accordance with an embodiment of the invention. The holder 1 is made of a dimensionally stable plastics, for example polycarbonate or acrylonitrile-butadiene styrene. These plastics both have a satisfactory shape retention and a high temperature resistance, which is important for a holder of this kind because such a holder is often exposed to large temperature fluctuations. The holder 1 has two main walls, *i.e.* a top wall 2 and a bottom wall 3. The holder 1 further comprises two side walls interconnecting the two main walls 2 and 3, *i.e.* a left-hand side wall 4 and a right-hand side wall 5 and a rear wall 6 interconnecting the two main walls 2 and 3 and the two side walls 4 and 5. The fourth side 7 of the holder 1 lying opposite the rear wall 6, is open, the holder having an opening 8 in this side 7. Through the opening 8 in the open side 7 a rectangular cassette 9, shown diagrammatically in dash-dot lines in Fig. 1 and containing a record carrier, in the present case a magnetic tape not shown, can be inserted into the holder 1 in order to protect the cassette 9. It is to be noted that the holder 1 has a partition, not shown, which separates the cassette-receiving space from a further receiving space adapted to receive a label, which partition is not shown in Figs. 1 and 2 because it is not relevant in the present context.

In the left-hand side wall 4 of the holder 1 is situated a clamping member 11, which is connected to the holder 1 in a recess in this side wall 4 for clamping a cassette 9 inserted into the holder 1 in the direction indicated by the arrow 10. Suitably, the clamping member 11 is made of an abrasion-proof elastic plastics. Such a clamping member has the advantage that it can be manufactured in a simple injection-moulding process in very short cycle time, which is beneficial for mass production. By means of such an injection-moulding process the clamping member can be manufactured with a high dimensional accuracy and small tolerances, which is particularly important in the case of a part of such a small size. Since the clamping member is made of an abrasion-proof elastic plastics this also guarantees a long life and a constant satisfactory performance throughout this long life. Such a clamping member of an elastic plastics further has the advantage that its elasticity can be chosen smaller than that of a silicone rubber clamping member, which yields the advantage that the deformations at the location of the cylindrical portion of such an elastic plastics clamping member are smaller so that the appearance is not disturbed by conspicuous deformations. The abrasion-proof elastic plastics of which the clamping member is made can be, for example, a block copolymer which can be processed as a thermoplastic and which comprises a hard segment of polybutylene teraphtalate and a soft segment on the basis of long-chain polyether glycols. Such a plastics is commercially available from Messrs. Du Pont under the trade name "Hytrel".

Figs. 3 and 4 only show a part of the holder 1 shown in Figs. 1 and 2 and clearly show the clamping member 11 of this holder 1. As already stated, the clamping member 11 is made of an abrasion-proof elastic plastics. The clamping member 11 comprises a flat elastically deformable plate portion 12 whose thickness is smaller than that of the side wall 4 wherein the clamping member 11 is connected to the holder 1 and whose main plane runs parallel with said side wall 4, as is apparent from Fig. 3. A clamping projection 13 projects from the plate portion 12 into the holder interior to retain a cassette inserted into the holder 1 and not shown in Figs. 5 and 6. The free dome-shaped end 14 of the clamping projection 13 extends into the insertion path of a cassette. The plate portion 12 is retained by a retaining portion 15 connected to the holder 1. The retaining portion 15 of the clamping member 11 is formed by a frame surrounding the elastically deformable plate portion 12 of the clamping member 11. The frame 15 comprises two frame limbs 17 and 18 which extend parallel to each other and to a direction indicated by an arrow 16 and two frame limbs 19 and 20 which also extend parallel to each other and transversely of the direction indicated by the arrow 16.

A groove-spring means 21, 22, 23 is interposed between the holder 1, *i.e.* the side wall 4 of the holder 1, and the two mutually parallel frame limbs 17, 18 and the further frame limb 20 respectively, which last-mentioned limb extends transversely of these two limbs 17 and 18. Of the spring-groove means 23 the sectional view in Fig. 5 shows the groove 24 in the clamping member 11 or the further limb 20 thereof and the spring 25 in the holder 1 or the side wall 4 thereof. The groove-spring means 21 also comprises a groove 26 and a spring 27. Likewise, the groove-spring means 22 comprises a groove 28 and a spring 29. To mount the clamping member 11 on the holder 1 the clamping member 11 can be slid onto the holder 1 in a slide-on direction 16 indicated in Figs. 3 and 4, which direction extends parallel to the orientation of the two mutually parallel groove-spring means 21 and 22.

As is apparent from Fig. 3, the clamping member 11 comprises a latching nose 30 which projects into the holder interior from the frame 15 of the clamping member 11 and which, when the clamping member is slid onto the holder 1, engages behind a holder portion formed by the rear side wall 6 in the present holder 1 to block movements of the clamping member 11 in a direction opposite to the slide-on direction 16. The groove-spring means 21, 22 and 23 and the latching nose 30 only provide a positive coupling between the clamping member 11 of the holder 1 in accordance with the shown embodiment of the holder 1, which results in a very reliable connection. The use of a latching nose has the advantage that the clamping member 11 can be removed simply from the holder 1 by disengagement of the latching means, for example in order to replace the clamping member 11.

When a cassette is inserted into the holder 1 in accordance with the shown embodiment the clamping member is partly deformed elastically *via* the dome-shaped free end 14 of the clamping projection 13 at the location of the elastically deformable plate portion 12. As a result of its elastic deformability the elastically deformable plate portion 12 bulges out until a cassette inserted into the holder 1 has reached its final position in the holder, in which position the dome-shaped free end 14 of the clamping projection 13 engages behind a cassette-wall portion of the cassette, so that as a result of the elastic resilient action of the plate portion 12 the clamping projection can move back in the direction of the holder interior, which causes the bulge of the plate portion 12 to disappear at least substantially.

## Claims

1. A holder (1) of rectangular shape which comprises two main walls and two side walls (4, 5) and a near wall (6) interconnecting the two main walls (2, 3), and is open at a fourth side (7) lying opposite the near wall (6), which holder (1) is adapted to receive through the open side (7) a rectangular cassette (9) with a record carrier contained therein in order to protect the cassette (9) and, in at least one side wall (4) is situated a clamping member (11) for clamping a cassette (9) inserted in the holder (1), which clamping member (11) is connected to the holder (1) in a recess in said side wall (4), comprises a part which projects into the holder interior and is made of an elastic material and, *via* the part which projects into the holder interior, can be partly deformed elastically by a cassette (9) inserted in the holder (1), characterized in that the clamping member (11) is made of an abrasion-proof elastic plastics and the clamping member (11) comprises a flat elastically deformable plate portion (12) whose thickness is smaller than that of the side wall (4) wherein the clamping member (11) is connected to the holder (1) and whose main plane runs parallel with said side wall (4), a clamping projection (13) projecting from said plate portion (12) into the holder interior to retain a cassette (9) inserted into the holder (1) and the plate portion (12) being retained by a retaining portion (15) connected to the holder (1).

2. A holder (1) as claimed in Claim 1, characterized in that the retaining portion (15) of the clamping member (11) is formed by a frame surrounding the elastically deformable plate portion (12) of the clamping member (11).

3. A holder (1) as claimed in Claim 2, characterized in that a groove-spring means (21, 22) is interposed between the holder (1) and each of at least two mutually parallel frame limbs (17, 18) and, to mount the clamping member (11) on the holder (1), the clamping member (11) is slidable onto the holder (1) in a slide-on direction (16) which extends parallel to the orientation of the two mutually parallel groove-spring means (17, 18).

4. A holder (1) as claimed in Claim 3, characterized in that the clamping member (11) comprises a latching nose (30) which projects into the holder interior from the frame (15) and which when the clamping member (11) is slid onto the holder (1) engages behind a holder portion (6) to block a movement of the clamping member (11) in a direction opposite to the slide-on direction (16).

5. A holder (1) as claimed in any one of the Claims 1 to 4, characterized in that the plastics of which the clamping member (11) is made is a block copolymer which can be processed as a thermoplastic and which comprises a hard segment of polybutylene teraphtalate and a soft segment on the basis of long-chain polyether glycols.

## Patentansprüche

1. Quaderförmiger Behälter (1), der zwei Hauptwände und zwei die beiden Hauptwände (2, 3) verbindende Seitenwände (4, 5) und eine Rückwand (6) aufweist und der an einer vierten gegenüber der Rückwand (6) liegenden Seite (7) offen ausgebildet ist und in den durch die offene Seite (7) hindurch eine quaderförmige Kassette (9) mit einem darin enthaltenen Aufzeichnungsträger zum geschützten Aufnehmen der Kassette (9) einführbar ist und der im Bereich mindestens einer Seitenwand (4) einen im Bereich dieser Seitenwand mit dem Behälter (1) verbundenen, zum klemmenden Festhalten einer in den Behälter eingeführten Kassette vorgesehenen Klemmteil (11) aufweist, der einen gegenüber der Seitenwand (4), in deren Bereich der Klemmteil (11) mit dem Behälter (1) verbunden ist, in das Behälterinnere vorspringenden Abschnitt aufweist und der aus einem elastischen Material besteht und von einer in den Behälter (1) eingeführten Kassette (9) über den in das Behälterinnere vorspringenden Abschnitt teilweise elastisch verformbar ist, dadurch gekennzeichnet, daß der Klemmteil (11) aus einem abriebfesten elastischen Kunststoff besteht und daß der Klemmteil (11) einen ebenen, gegenüber der Seitenwand, in deren Bereich der Klemmteil mit dem Behälter verbunden ist, dünnwandigeren, elastisch verformbaren Plattenabschnitt (12) aufweist, von dem ein in das Behälterinnere vorspringender Klemmfortsatz (13) zum klemmenden Festhalten einer in den Behälter (1) eingeführten Kassette (9) absteht und der von einem Halteabschnitt (15) gehalten ist, der mit dem Behälter (1) verbunden ist.

2. Behälter (1) nach Anspruch 1, dadurch gekennzeichnet, daß der Halteabschnitt (15) des Klemmteiles (11) durch einen den elastisch verformbaren Plattenabschnitt (12) des Klemmteiles (11) umgebenden Rahmen gebildet ist.

3. Behälter (1) nach Anspruch 2, dadurch gekennzeichnet, daß zumindest zwischen zwei zueinander parallel verlaufenden Rahmenstegen (17, 12) und dem Behälter (1) je eine Nut-Feder-Führung (21, 22) vorgesehen ist und zum Montieren des Klemmteiles (11) an dem Behälter (1) der Klemmteil (11) in einer zur Richtung von zwei zueinander parallel verlaufenden Nut-Feder-Führungen (17, 18) parallelen Aufschieberichtung (16) auf den Behälter (1) aufschiebbar ist.

4. Behälter (1) nach Anspruch 3, dadurch gekennzeichnet, daß der Klemmteil (11) mit einer vom Rahmen (15) in das Behälterinnere abstehenden Rastnase (30) versehen ist, die bei auf den Behälter (1) aufgeschobenem Klemmteil (11) hinter einem Behälterabschnitt (6) einrastet und ein Verschieben des Klemmteiles (11) entgegen der Aufschieberichtung (16) blockiert.

5. Behälter (1) nach einem der Ansprüche 1 bis 4, dadurch gekennzeichnet, daß der Kunststoff, aus dem der Klemmteil (11) besteht, durch ein thermoplastisch verarbeitbares Blockcopolymer gebildet ist, das aus einem harten Segment aus Polybutylen-Terephtalat und einem weichen Segment auf der Basis langkettiger Polyetherglykole besteht.

## Revendications

1. Etui à cassette (1) de forme rectangulaire qui comprend deux parois principales (2, 3) et deux parois latérales (4, 5) et une paroi arrière (6) reliant les deux parois principales (2, 3), et est ouvert au niveau d'un quatrième côté (7) se trouvant à l'opposé de la paroi arrière (6), lequel étui à cassette (1) est à même de recevoir, par le côté ouvert (7), une cassette rectangulaire (9) contenant un support d'enregistrement afin de protéger la cassette (9) et, dans au moins une paroi latérale (4) se trouve un élément de serrage (11) destiné à serrer une cassette (9) insérée dans l'étui à cassette (1), lequel élément de serrage (11) est relié à l'étui à cassette (1) dans une cavité ménagée dans ladite paroi latérale (4), comprend une partie qui fait saillie à l'intérieur de l'étui à cassette et est fait d'une matière élastique et, via la partie qui fait saillie à l'intérieur de l'étui à cassette, peut être en partie déformé élastiquement par une cassette (9) insérée dans l'étui à cassette (1), caractérisé en ce que l'élément de serrage (11) est fait d'une matière plastique résistant à l'abrasion et l'élément de serrage (11) comprend une section de plaque plane élastiquement déformable (12) dont l'épaisseur est moindre que celle de la paroi latérale (4) dans laquelle l'élément de serrage (11) est relié à l'étui à cassette (1) et dont le plan principal s'étend parallèlement à ladite paroi latérale (4), une saillie de serrage (13) dépassant de ladite section de plaque (12) à l'intérieur de l'étui à cassette pour retenir une cassette (9) insérée dans l'étui à cassette (1) et la section de plaque (12) étant retenue par une section de retenue (15) reliée à l'étui à cassette (1).

2. Etui à cassette (1) suivant la revendication 1, caractérisé en ce que la section de retenue (15) de l'élément de serrage (11) est constituée par un cadre entourant la section de plaque élastiquement déformable (12) de l'élément de serrage (11).

3. Etui à cassette (1) suivant la revendication 2, caractérisé en ce qu'un moyen à rainure-ressort (21, 22) est interposé entre l'étui à cassette (1) et chacune des au moins deux branches de cadre (17, 18) mutuellement parallèles et pour monter l'élément de serrage (11) sur l'étui à cassette (1), l'élément de serrage (11) pouvant coulisser sur l'étui à cassette (1) dans un sens de coulissement (16) qui s'étend parallèlement à l'orientation des deux moyens à rainure-ressort mutuellement parallèles (21, 22) (Fig. 1, 2, 3, 4).

4. Etui à cassette (1) suivant la revendication 3, caractérisé en ce que l'élément de serrage (11) comprend un nez de verrouillage (30) qui fait saillie à l'intérieur de l'étui à cassette depuis le cadre (15) et qui, lorsque l'élément de serrage (11) est glissé sur l'étui à cassette (1), s'engage derrière une section (6) de l'étui à cassette pour bloquer tout déplacement de l'élément de serrage (11) dans un sens opposé au sens de coulissement (16).

5. Etui à cassette (1) suivant l'une quelconque des revendications 1 à 4, caractérisé en ce que la matière plastique dont est fait l'élément de serrage (11) est un copolymère en masse qui peut être traité comme un thermoplastique et qui comprend un segment dur de polybutylène-téréphtalate et un segment mou à la base de polyétherglycols à chaîne longue.
